# EUROPÄISCHE PATENTSCHRIFT

(11) **EP 1 959 162 B1**
(45) Veröffentlichungstag und Bekanntmachung des Hinweises auf die Patenterteilung: **20.10.2010**
(21) Anmeldenummer: 08002406.0
(22) Anmeldetag: 09.02.2008
(51) Int. Cl.: F16H 19/00

(54) **Teilelastisches Getriebe für reversierende Bewegungen**
Partially elastic transmission system for reversing movements
Engrenage partiellement élastique pour mouvements réversibles

(30) Priorität: 13.02.2007 DE 102007006951
(43) Veröffentlichungstag der Anmeldung: 20.08.2008
(73) Patentinhaber: Pfeuffer GmbH, 97318 Kitzingen (DE)
(72) Erfinder: Pfeuffer, Lothar, 97318 Kitzingen (DE)
(74) Vertreter: Pöhner, Wilfried Anton, Dr.

(56) Entgegenhaltungen:
- EP-A- 0 137 577
- DE-U- 7 306 885
- DE-U1- 29 720 518
- GB-A- 1 445 570
- US-A- 3 444 784
- US-A- 3 988 939

## Beschreibung

Die Erfindung bezieht sich auf ein teilelastisches Getriebe für reversierende Bewegungen zwischen zwei Anschlägen, bestehend aus einem drehbar gelagerten Zahnrad und einem länglichen Kraftübertragungselement, in das die Zähne des Zahnrades eingreifen und das zwischen zwei Anschlägen bewegbar ist und das in Längsrichtung zahlreiche, aneinandergrenzende und zueinander identische Abschnitte mit senkrecht zur Längsachse ausgerichteten Vertiefungen aufweist, wobei die Zähne komplementär zu den Vertiefungen des Kraftübertragungselementes geformt sind und entsprechend der Länge der Abschnitte zueinander beabstandet sind und wenigstens ein Zahn kraftschlüssig in einer der Vertiefungen des Kraftübertragungselementes anliegt

Im Maschinenbau sind reversierende Bewegungen, also hin- und herlaufende Maschinenteile, eine sehr häufige Aufgabe, die zu einem großen Teil auf den Spezialfall der Bewegung zwischen zwei festen Anschlägen begrenzt sind. Bei dieser reversierenden Bewegung muss nicht nur die Massenträgheit aller bewegten Teile vom Antrieb überwunden werden, sondern auch die Reibung. In der Regel ist die Reibung umso höher, je kostenbewusster die Konstruktion und die Auswahl der Maschinenelemente ist, z. B. durch raue Oberflächen, nicht ganz exakt fluchtende oder nur in etwa orthogonal ausgerichtete Führungselemente sowie kostengünstige Gleitlager, wodurch das benötigte Antriebsdrehmoment weiter erhöht wird.

Als sehr geeignetes Antriebselement für derart ausgelegte Mechaniken hat sich nach aktuellem Stand der Technik der Drehstromasynchronmotor eingebürgert. Er wird auch Käfigläufer genannt, womit die Form der elektrischen Leiter im rotierenden Teil des Motors, dem Anker, beschrieben wird. Vorteile dieses Motorprinzips sind, dass er direkt von der weltweit sinusförmig standardisierten, dreiphasigen Netzversorgung und mit nur einem Schalter als notwendigem Zusatz in Drehung versetzt werden kann, wobei er während der Startphase selbsttätig den erforderlichen Beschleunigungsstrom oberhalb des Nennstroms aus dem Netz entnimmt und im Dauerbetrieb eine zur Netzfrequenz proportionale, etwa konstante Drehzahl einnimmt und dabei auch nur einen zur Last proportionalen Strom aus dem Netz zieht. Die Drehzahl des Motors schwankt nur geringfügig, um den sogenannten Schlupf in Abhängigkeit von der Last, liegt jedoch stets recht nahe an der sogenannten "synchronen Drehzahl", die sich aus Netzfrequenz und der Anzahl der Motorpole ergibt. Z.B. beträgt bei zweipoligen Motoren und einer Netzfrequenz von 50 Hertz die synchrone Drehzahl 3000 min⁻¹, die bei Belastung des Motors im Nennbereich auf Werte bis zu etwa 2850 min⁻¹ absinkt.

Vorteile des Drehstromasynchronmotors sind das Fehlen von elektrischen Schleifkontakten, sogenannten Bürsten, wie bei Gleichstrommotoren und das Fehlen von teuren Magneten wie bei den permanent erregten Gleichstrommotoren oder permanent erregten Drehstromsynchronmotoren.

Im Vergleich zu diesen beiden Motorprinzipien hat der Drehstromasynchronmotor den Nachteil eines relativ hohen Eigenträgheitsmomentes, also vergleichsweise hoher, zu beschleunigender Massen. Dieser Nachteil wird im alltäglichen Betrieb dadurch kompensiert, dass der Anlaufstrom entsprechend erhöht wird, was aufgrund der robusten Bauweise und der hohen Masse auch ohne thermische Überlastung möglich ist. Der drehende Teil des Motors, der Anker, ist extrem robust aufgebaut: er besteht nur aus dem sogenannten Blechpaket zwecks Reduzierung der Wirbelströme, in dessen parallel zur Achse und an den Stirnseiten auch radial verlaufenden Bohrungen sehr leitfähiges Material eingegossen ist, das den vorerwähnten Käfig bildet. Dieses rotierende Element benötigt keinerlei weitere, elektrische Verbindungen, wie z. B. ein Gleichstrommotor oder ein Drehstromschleifringläufer. Die einzigen Verschleißteile sind die beiden Lager, die jedoch nach aktuellem Stand der Fertigungstechnik ebenfalls vergleichsweise preiswert verfügbar sind.

Aus diesen Gründen hat sich das Prinzip des Drehstromasynchronmotors als das am weitesten verbreiteteste Prinzip für elektrische Antriebe durchgesetzt. Aufgrund der sehr hohen, gefertigten Stückzahlen ist dieses Prinzip auch ökonomisch anderen überlegen, weshalb prinzipbedingte Nachteile in Kauf genommen werden,: Nach dem ein drehender Drehstromasynchronmotor vom Netz getrennt wird, bringt er praktisch kein Bremsdrehmoment auf, sondern rotiert, getrieben von der in seiner eigenen Masse gespeicherten kinetischen Energie immer noch weiter, auch wenn die angetriebene Last schon längst den gewünschten Verfahrweg durchlaufen hat und kurz vor dem Anschlag angelangt ist. Das jetzt noch vom Motor abgegebene Drehmoment ist unerwünscht und erhöht nur die Belastung der Endanschläge.

Zwar kann nach aktuellem Stand der Technik ein sogenannter"Vierquadranten-Stromrichter" mit einem zusätzlichen Geber auf dem Motor, welcher dem Stromrichter den jeweils aktuellen Stand des Motordrehwinkels zurückmeldet, den Motor nicht nur gezielt abbremsen, sondern ihm zusätzlich ein Verzögerungsmoment abverlangen, indem er ein der Bewegungsrichtung entgegengesetztes Drehfeld ausbildet. Ein solcher "Servoantrieb" ist jedoch um ein Vielfaches teurer als der Motor selbst und deshalb nur dann wirtschaftlich sinnvoll und üblich, wenn der Reversierantrieb stets wechselnde Positionen mit hoher Genauigkeit anfahren muss.

In den Fällen, bei denen ein immer gleicher Verfahrweg durch zwei Festanschläge begrenzt ist, ist es eine einfachere Lösung, den Motor dadurch zum Halten zu bringen, dass ein Endschalter kurz vor Erreichen des Anschlages die Netzversorgung des Motors abschaltet und eine Bremse auf der Motorwelle aktiviert, die den Motor abbremst.

Die zusätzliche Bremse erhöht weiter das Gesamt-Trägheitsmoment des Antriebs. Negativ ist, dass zusätzliche Investitionskosten anfallen und unerwünscht, dass die Bremse unangenehme Betriebsgeräusche verursachen kann und schnell verschleißt, wobei nicht nur die Bremsbeläge des stehenden Teils Bremse, sondern auch die sich auf der Motorwelle mitdrehende, metallene Bremsscheibe einem erhöhten Abrieb unterworfen ist.

Auf aktuellem Stand der Technik ist es als Mechanik für die Übertragung der rotierenden Bewegung des Antriebes auf eine lineare, reversierende Bewegung bekannt, ein Zahnrad auf der Abtriebswelle eines rotierenden Antrieb anzuordnen, das in ein längliches Kraftübertragungselement eingreift, auf dem zahlreiche, aneinandergrenzende und zueinander identische Vertiefungen angebracht sind. In wenigstens eine dieser Vertiefung greift ein Zahn des Zahnrades ein.

Die gattungsgemäße US 3,444,784 nennt als längliches Kraftübertragungselement eine Zahnstange in die ein Ritzel, also ein Zahnrad eingreift.

Die EP 0137 577 führt als längliches Kraftübertragungselement eine Kette auf, die um zwei Zahnräder herumläuft und dadurch gespannt ist, so dass laufend ein Zahn des Zahnrades in eine Vertiefung des länglichen Kraftübertragungselementes eingreift.

Ein massiver Nachteil beider Anordnungen ist, dass beim Erreichen eines Anschlages die mechanisch unelastische Verbindung zwischen einem Zahn auf dem Zahnrad und einer Vertiefung des länglichen Kraftübertragungselementes dafür sorgt, dass die in der rotierenden Masse des Antriebsmotors gespeicherte Energie schlagartig auf den Anschlag übertragen wird und ihn dadurch einer sehr hohen Spitzenbelastung aussetzt.

Deshalb hat sich die Erfindung die Aufgabe gestellt, ein teilelastisches Getriebe für reversierende Bewegungen zwischen zwei festen Anschlägen zu entwickeln, in dem beim Erreichen der beiden Anschläge ein mechanischer Energiespeicher aktiviert wird, der noch vom rotierenden Antrieb abgegebene, zu diesem Zeitpunkt unerwünschte Energie aufnimmt und mit einer Zeitverzögerung wieder abgibt, wobei einfache, kostengünstige und bewährte standardisierte Antriebselemente zur Konstruktion verwendet werden sollen.

Als Lösung präsentiert die Erfindung ein teilelastisches Getriebe bei dem das Kraftübertragungselement in ein Mittelstück und zwei angrenzende Endstücke aufgeteilt ist und alle diese Stücke entweder längs hintereinander angeordnet sind und sich mit ihren Stirnseiten berühren oder parallel zueinander ausgerichtet sind und sich das Mittelstück jeweils mit einem Endstück auf einer Länge von wenigstens Abschnitt seitlich überlappt und das Mittelstück und die Endstücke aus jeweils kraftschlüssig miteinander verbundenen Abschnitten bestehen und die auf beiden Seiten an das Mittelstück anschließenden Endstücke parallel oder longitudinal gegenüber dem Mittelstück verschiebbar sind und über je eine längsgerichtete Feder mit dem Mittelstück verbunden sind.

Das physikalische Wirkungsprinzip dieser Lösung beruht darauf, dass während des Verfahrens der Last zwischen den beiden Anschlägen eine starre, mechanische Kopplung zwischen dem rotierenden Motor und der sich bewegenden Last besteht. Sobald sich die Last kurz vor dem Anschlag befindet, wird die Energiezufuhr des - Motors abgeschaltet, z. B. durch einen Schalter, der von der Last betätigt wird, sodass der Motor nicht mehr treibt sondern "austrudelt". Das Drehmoment, das der Motor in dieser Phase noch abgibt, entsteht durch die mechanische Energie, die noch in der rotierenden Masse des Motors gespeichert ist. Diese Energie wird zu einem Teil von der Reibung zwischen den einzelnen Bestandteilen des Getriebes sowie durch die Reibung von Dichtungselementen im Antrieb aufgenommen und in Wärme umgewandelt. Die übrige, kinetische Energie treibt die Last gegen den mechanischen Anschlag. Diese Bewegung wird noch durch diejenige kinetische Energie weiterverstärkt, die in der bewegten Last selbst gespeichert ist.

Um diese Energien nicht schlagartig, sondern kontinuierlich abzubauen, ist es üblich, den Anschlag mit elastischen Puffern aus verformbaren Material oder Stoßdämpfern auszustatten. Als Stoßdämpfer sind pneumatisch oder hydraulisch wirkende Kolben bekannt, die sich linear in einem Zylinder bewegen. Die dafür notwendigen Dichtungen sind jedoch wieder ein Verschleißteil.

Es ist die Kernidee der Erfindung, das starr in den Antriebsstrang gekoppelte Mittelstück des Kraftübertragungselements zu beiden Seiten durch je ein Endstück zu ergänzen, das in Bewegungsrichtung verschiebbar ist und während dieser linearen Verschiebung die vom Motor abgegebene, mechanische Energie auf eine Feder überträgt, welche durch die Restenergie des rotierenden Motors und durch Übertragung vom Motor auf ein Zahnrad und vom diesem auf das Endstück in sich zusammengeschoben wird und auf diese Weise die mechanische Energie zwischenspeichert und sie alsbald durch Ausdehnen der Feder und Zurückdrücken des Endstückes wieder abgibt.

Es gehört zu den wesentlichen Eigenschaften eines erfindungsgemäßen, teilelastischen Getriebes, dass das von der Feder wieder rückwärts bewegte Endstück beim Auftreffen auf dem Mittelstück nur noch so wenig kinetische Energie abgibt, dass das Mittelstück nicht mehr aus seiner Position am Anschlag herausgedrückt wird. Diese Bewegung wird durch ein ausreichendes Maß an Reibung im Übertragungsweg verhindert, was in der Praxis meist sowieso durch die Verwendung von kostengünstigen Lagerungen des Mittelstückes der Kraftübertragung entsteht und i. d. R. durch zusätzliche Abdichtungen noch weiter verstärkt wird.

Ein erfindungsgemäßes, teilelastisches Getriebe bedarf jedoch in keinem Fall zusätzlicher Reibungselemente im Bereich des Mittelstückes. Falls die im System aus anderen Gründen vorhandene Reibung so gering ist, dass das reversierende Endstück ungewollt mit einer noch derart hohen kinetischen Energie wieder an das Mittelstück anschlägt, dass es dieses aus seiner Position am Anschlag herausbewegt, sind zusätzliche Reibungselemente ausschließlich im Verfahrweg des Endstückes sinnvoll. Zwar sind diese Reibungselemente von ihrem Prinzip ebenfalls Bremsen, die eigentlich unerwünscht sind, die jedoch im Unterschied zu einer Betriebsbremse auf der Motorwelle erheblich einfacher aufgebaut sind, erheblich kleiner dimensioniert sind und erheblich weniger Energie umzusetzen haben, also im Vergleich zu den motornahen Betriebsbremsen nahezu verschleißfrei arbeiten können und deshalb im Sinne der Aufgabenstellung noch akzeptabel sind.

Wenn die Last einen Anschlag erreicht hat, und wenn die noch im rotierenden Motor zwischengespeicherte, kinetische Energie durch die Bewegung des Endstückes abgebaut ist und das Endstück wieder seinen Anschlag am Mittelstück des teilelastischen Getriebes erreicht hat, ist das System wieder bereit, in der entgegengesetzten Richtung zu beschleunigen, wobei keine Zeitverzögerung durch das soeben bewegte Endstück auftritt, da dieses sich wieder bereits an das Mittelstück heranbewegt hat. Nach dem Beschleunigen, dem Durchfahren der Strecke und dem Erreichen des anderen, gegenüberliegenden Anschlages durch die Last läuft an diesem Anschlag der identische Prozess der Zwischenspeicherung der noch im Motor verbliebenen, restlichen kinetischen Energie durch Verschieben des Endstückes und Zwischenspeichern der mechanischen Energie in der Feder zwischen Endstück und Mittelstück ab.

In der Beschreibung der Elemente des erfindungsgemäßen, teilelastischen Getriebes ist ein längliches Kraftübertragungselement enthalten, das zahlreiche, identische Abschnitte mit Vertiefungen aufweist, die senkrecht zur Längsachse und den gleichen Abständen zueinander angeordnet sind. In der Praxis seit langem bewährte und weithin bekannte Ausführungsformen sind eine Zahnstange und eine Kette, deren Prinzip schon seit Jahrhunderten bekannte und bewährte Antriebselemente sind.

Eine der ältesten, bekannte Ausführungsform einer Zahnstange ist ein Baumstamm, in welchen in regelmäßigen Abständen Bohrungen eingebracht und Pflöcke eingeschlagen sind. Hinter diese Pflöcke greifen andere Pflöcke, die auf der Außenseite eines rotierenden Zylinders angebracht sind. Die nächste Entwicklungsstufe ist der Ersatz der Holzpflöcke durch Zähne, deren Flanken so ausgebildet sind, dass sie in jeder Phase des Ineinanderkämmens sich auf einer Linie berühren und der Berührungspunkt kontinuierlich auf der Flanke entlang wandert. Durch Zähne aus Metall und durch stabile Schmierstoffe wurde der Wirkungsgrad der Kraftübertragung weiter verbessert und das Betriebsgeräusch weiter abgesenkt.

In der Ausführung des länglichen Kraftübertragungselements als Zahnstange wird das darin eingreifende oder kämmende Zahnrad meist Ritzel genannt, da es nur noch eine möglichst geringe Anzahl von Zähnen aufweist, um die i. d. R. hohe Drehzahl des Motors an die niedrigen Verfahrgeschwindigkeiten anzupassen. In den meisten Fällen ist der Antrieb ein rotierender, ist mit dem Zahnrad verkoppelt und die Last ist mit dem länglichen Kraftübertragungselement, also z. B. der Zahnstange, verbunden.

Es ist jedoch auch die umgekehrte Anordnung möglich und sinnvoll, nämlich die Bewegung des länglichen Kraftübertragungselements, also z. B. einer Zahnstange, durch einen linear wirkenden Antrieb, welcher die Last über das in der Zahnstange kämmende Zahnrad verschwenkt. Ein praktisches Anwendungsbeispiel dafür ist eine Ventilklappe in einem Rohr oder ein Wehr in einem Fluss. Auch in diesem Fall drücken die gegenüber dem Mittelstück in Bewegungsrichtung verschiebbaren Endstücke eine Feder zusammen, die anschließend die Endstücke wieder zu ihrem Anschlag an dem Mittelstück zurückbewegt.

Wenn ein erfindungsgemäßes, teilelastisches Getriebe für einen Linearantrieb verwendet wird, der an dem länglichen Kraftübertragungselement in Form einer Zahnstange angreift, dann müssen die Verfahrwege der Endstücke vom Mittelstück hinwegweisend orientiert sein. Wenn hingegen der Antrieb rotiert und deshalb am Zahnrad angreift, dann müssen die Endstücke in der Verzögerungsphase neben das Mittelstück geschoben werden. In dieser Ausführungsform muss also das Zahnrad so breit sein, dass es sowohl über das Mittelstück als auch über das parallel dazu verschiebbare Endstück hinweg greift. Alternativ ist es ebenso denkbar, dass das Mittelstück eine andere Zahnteilung aufweist als die Endstücke und das Zahnrad deshalb aus zwei koaxial angeordneten, miteinander verbundenen Zahnrädern besteht, die jeweils komplementär zum Mittelstück bzw. zu den Endstücken sind. In jedem Fall sind diese beiden Zahnräder fest miteinander verbunden.

Ebenso wie die Ausrichtung des Verfahrweges der Endstücke davon abhängt, ob ein Linearantrieb am Mittelstück oder ein rotierender Antrieb am Zahnrad angreift, hängt auch der Einbau der energiespeichernden Feder davon ab. Beim Ankoppeln von rotierenden Antrieben an das Zahnrad ist die Feder stets zwischen dem jeweils dem inneren Hilfsanschlag des Endstückes und dem Endstück selbst angeordnet, falls hingegen ein linearer Antrieb das Mittelstück, also die Zahnstange bewegt, ist die Feder jeweils zwischen dem äußeren Hilfsanschlag und dem Endstück angeordnet. Die letztgenannte Konfiguration ist v. a. dann sinnvoll, wenn z. B. ein Hydraulikzylinder eine große Drosselklappe mit einer konstanten Verschwenkgeschwindigkeit zwischen zwei Anschlägen hin und her bewegen soll.

Denkbar ist es jedoch auch, dass das Zahnrad mit einer Spindel verkoppelt ist, auf welcher sich eine Mutter zwischen zwei Anschlägen linear hin- und her bewegt. Auf diese Weise wird eine primäre Linearbewegung in eine sekundäre Linearbewegung übersetzt, welche in der Nähe der beiden Anschläge jeweils eine Feder als elastisches Glied enthält. Dabei kann als Feder nicht nur eine Spiralfeder sondern auch eine Reihe von Tellerfedern, ein dauerelastischer Kunststoffblock oder ein Pneumatikzylinder eingesetzt werden.

Falls das teilelastische Getriebe und dessen Last nicht ausreichend Reibung aufweisen sollte, um ein Zurückprallen des Mittelstücks beim Auftreffen des reversierenden Endstückes zu vermeiden, ist es sinnvoll, parallel zum Endstück einen Stoßdämpfer anzuordnen. Alternativ oder in Ergänzung zum Stoßdämpfer kann in den Verfahrweg der Endstücke außerhalb des Mittelstückes auch eine linear wirkende Bremse angeordnet werden.

Ein erfindungsgemäßes, teilelastisches Getriebe ist sowohl mit einer Paarung aus Ritzel und Zahnstange als auch mit einer Paarung aus Kettenrad und Kette möglich. Das im Hauptanspruch genannte Zahnrad wird in der Kombination mit einer Kette meist als Kettenrad bezeichnet, ist jedoch seiner Form nach ebenfalls ein Rad, welches auf seinem Umfang mit Zähnen bestückt ist. Diese Zähne sind im Fall eines Kettenrades so ausgebildet, dass sie komplementär zu den Vertiefungen geformt sind, die in jedem Kettenglied ausgebildet sind.

Eine Kette unterscheidet sich in ihrem prinzipiellen Aufbau von einer Zahnstange vor allem dadurch, dass ihre einzelnen Abschnitte gelenkig miteinander verbunden sind, weshalb sie anders als eine Zahnstange nur auf Zug und nicht auf Druck beansprucht werden kann. Dieser Nachteil wird in der Praxis jedoch dadurch ausgeglichen, dass die Kette zu einem ringförmigen Element geschlossen wird, das mit zwei Kettenrädern zu einem Oval aufgespannt wird. Über den Verfahrweg hinweg erstrecken sich also zwei Ketten, von denen je nach Kraftrichtung nur die eine oder die andere beansprucht wird. Die jeweils unbeanspruchte Hälfte der Kette dient nur zur Rückführung der soeben beanspruchten Kettenglieder.

Daraus ergibt sich als Vorteil gegenüber einer mit der Last mitfahrenden Zahnstange, die an den Enden des Verfahrweges jeweils sperrig in den Raum hinausragt, eine deutlich reduzierte Gesamtbreite.

Ein weiterer Vorteil der Kette gegenüber der Zahnstange ist die in der Regel kostengünstigere Herstellung aus standardisierten Elementen, die schnell und kostengünstig konfiguriert werden können.

Durch Verwendung von zwei solcher geschlossenen Ketteringen lässt sich ebenfalls ein erfindungsgemäßes, teilelastisches Getriebe für reversierende Bewegungen zwischen zwei Anschlägen aufbauen. Dazu ist eine Hilfskette oder ein Hilfszahnriemen erforderlich, welcher über zwei Zwischenräder zu einem Oval gespannt wird und die Last hin und her bewegt. Koaxial zu einem dieser Zwischenräder, also auf der gleichen Welle ist ein Abtriebskettenrad angeordnet, das über eine Kette mit dem Zahnrad auf der Motorwelle verbunden ist.

Diese Kette ist eine Ausführungsform des erfindungsgemäßen, länglichen Kraftübertragungselementes, indem sie ein Mittelstück enthält, dessen Länge zum Verfahrweg der Last zwischen den beiden Anschlägen proportional ist, und das erfindungsgemäß zu beiden Seiten mit einem Endstück verbunden ist, welches erfindungsgemäß über je eine längsgerichtete Feder mit dem Mittelstück verbunden ist und dadurch longitudinal gegenüber dem Mittelstück verschiebbar ist. Dadurch kann beim Erreichen des Anschlages die vom Motor noch weiterhin abfließende, kinetische Energie in der Longitudinalfeder zwischengespeichert werden. Der Motor dreht also "etwas über sein Ziel hinaus" und wird dann von der gestreckten Feder wieder in diejenige Position zurückgeholt, die dem Erreichen des Anschlages durch die Last entspricht.

Für die soeben beschriebene Konfiguration aus zwei Ketten ist entscheidend wichtig, dass die Beabstandung zwischen Endstück und Mittelstück nur dann zugelassen werden darf, wenn die Last einen der beiden Anschläge erreicht. Die zweite Feder, die das andere Ende des Mittelstücks mit dem anderen Endstück verbindet, muss in diesem Zustand blockiert sein, also kraftschlüssig überbrückt. Diese Überbrückung wird dadurch realisiert, dass sowohl das letzte Kettenglied des Mittelstückes und das letzte Glied des Endstückes beide auf dem Abtriebskettenrad aufliegen und dort von dessen Zähnen festgehalten werden. Diese Zähne müssen also so geformt sein, dass sie auch ein Kettenstück, das das Kettenrad nicht vollständig umschlingt, festhalten. Dadurch wirken die Zähne wie eine kraftschlüssige Kupplung zwischen Mittelstück und Endstück.

Diese "Kupplung" wird erst dann deaktiviert, wenn die Trennstelle zwischen Mittelstück und Endstück sich vom Abtriebskettenrad abhebt, also zwischen Abtriebskettenrad und dem Zahnrad auf der Antriebswelle frei gespannt ist. Wenn in diesem Zustand eine Zugkraft auf die Trennstelle ausgeübt wird, längt sich die longitudinal ausgerichtete Feder, wodurch sich ein Abstand zwischen Mittelstück und Endstück einstellt.

Auf diese Weise kann beim Erreichen des Anschlages durch die Last der Antrieb mit seiner ihm noch verbliebenen kinetischen Energie die Kette längen, die Kette dehnt sich also. Diese Dehnung wird jedoch im nächsten Schritt von der Feder wieder "straff gezogen"; der Kettenring hat dann wieder seine ursprüngliche Länge, der Motor kann jetzt reversieren und die Last an den anderen Anschlag heran bewegen. Wenn die Last den anderen Anschlag erreicht hat, wird die andere Trennstelle zwischen dem Mittelstück und einem Endstück sich ebenfalls gerade vom Abtriebskettenrad abgehoben haben und dadurch nicht mehr von den Zähnen des Abtriebskettenrads blockiert sein, sodass das restliche Drehmoment des Motors auch diese Trennstelle auseinander ziehen und die überbrückende Feder temporär längen kann.

Es ist also erforderlich, dass die Trennstellen so auf die Kette verteilt werden, dass sie genau beim Erreichen des Anschlages vom Abtriebskettenrad gerade abgehoben sind und sich dann im jeweils frei gespannten, Zugbelastetem Teil der Kette befinden. Die andere Trennstelle muss dann entweder auf dem Abtriebskettenrad aufliegen oder sich im unbelasteten Teil der Kette befinden.

In einer weiteren, alternativen Ausführungsform kann das längliche Kraftübertragungselement in Form einer Kette auch ohne den Umweg über den Hilfszahnriemen direkt mit der Last verknüpft werden, wenn sichergestellt ist, dass die Trennstellen zwischen Mittelstück und Endstück kraftschlüssig miteinander verbunden sind, und jeweils nur eine Trennstelle genau beim Ereichen eines Anschlages freigegeben wird.

Zur temporären, kraftschlüssigen Verbindung der Trennstellen in der Primärkette ist eine sekundäre Hilfszahnkette geeignet, die in demjenigen Bereich auf die primäre Kette aufgedrückt wird, in dem die Trennstellen zwischen Mittelstück und Endstück kraftschlüssig miteinander verbunden sein müssen.

Dazu ist es sinnvoll, dass die sekundäre Hilfszahnkette ebenfalls zu einem Ring geschlossen ist, der über zwei drehbar gelagerte Räder zu einem zweiten Oval aufgespannt ist und Kette und Hilfszahnkette sich innerhalb des parallel verlaufenden Bereiches in einer Parallelführung befinden, die aus zahlreichen kleinen Kettenrädern oder aus zwei parallelen Gleitstücken besteht. Je nach Formung der Zähne auf der Zahnkette unterstützt die Parallelführung die Kupplungswirkung oder ermöglicht sie.

Alternativ kann an Stelle einer Kette auch ein Zahnriemen eingesetzt werden, der nach heutigem Stand der Technik kostengünstiger ist und geringere Betriebsgeräusche verursacht, im Vergleich mit einer Kette jedoch nicht annähernd deren Standzeit erreicht.

Wenn das erfindungsgemäße ,,längliche Krafiübertragungselement" eine Kette oder ein Zahnriemen ist, dann wird sie (er) sich durch die dazwischen eingefügten Federn bei Erreichen eines Anschlages ausdehnen, wodurch ein Teil der Kette nicht mehr straff zwischen den beiden Rädern gespannt ist. Prinzipiell ist es möglich, dafür einen Kettenspanner einzusetzen, wobei jedoch zu beachten ist, dass dessen Spannkraft nicht so hoch sein darf, dass sie die Federn zwischen Mittelstück und Endstück dehnen.

Als Anwendung für ein erfindungsgemäßes, teilelastisches Getriebe wird z. B. eine verschwenkbare Drosselklappe oder eine verschwenkbare Sperrklappe in einem Rohr, einer Rinne, einem Kanal oder einem Fluss genannt, die zwischen zwei Anschlägen verschenkt wird und von einem Linearmotor angetrieben werden soll.

Eine andere, sehr interessante Anwendung ist ein sogenannter Probenentnehmer, also ein Gefäß, das durch einen Materialstrom in einem Fallrohr quer zur Strömungsrichtung und mit möglichst konstanter Fahrgeschwindigkeit von Anschlag zu Anschlag bewegt wird. Dabei ist eine gleichmäßige Verfahrgeschwindigkeit erwünscht, um aus jedem Punkt des Querschnittes vom durchfahrenen Fallrohr jeweils eine gleiche Probemenge aufzunehmen.

Im Folgenden sollen weitere Einzelheiten und Merkmale der Erfindung anhand von Beispielen näher erläutert werden. Diese sollen die Erfindung jedoch nicht einschränken, sondern nur erläutern. Es zeigt in schematischer Darstellung:
- Figur 1 - 3:: Die wesentlichen Komponenten eines teilelastischen Getriebes mit Ritzel und Zahnstange in drei Phasen der Bewegung
- Figur 4:: Hauptbestandteil eines teilelastischen Getriebes mit einer Kette und einer Hilfskette.

### Die Figuren zeigen im Einzelnen:

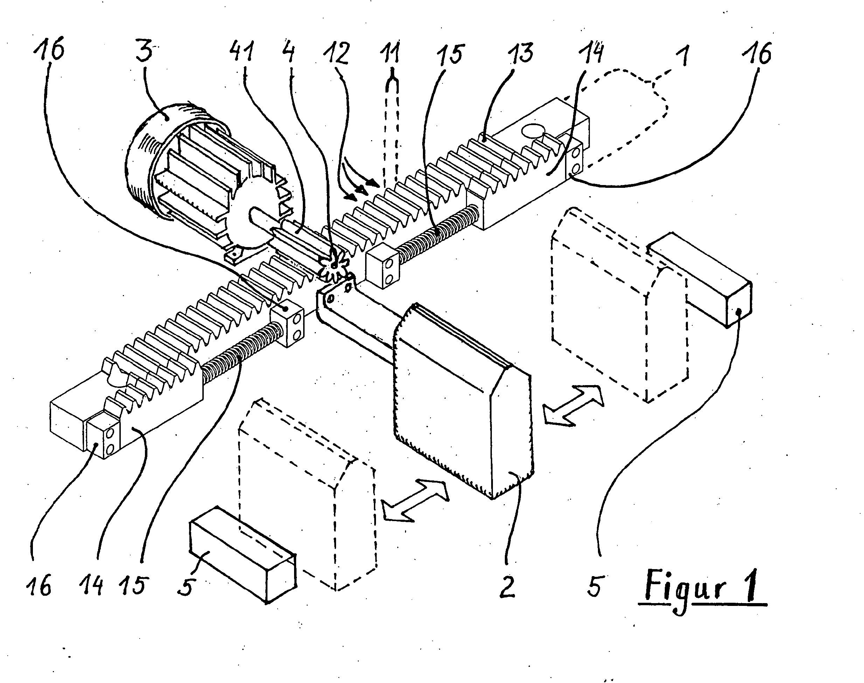

**Figur 1** zeigt die wesentlichen Komponenten eines erfindungsgemäßen, teilelastischen Getriebes, bestehend aus einem Antrieb 3, auf dessen Abtriebswelle ein Zahnrad 4 montiert ist, dessen Zähne 41 komplementär zu den Zähnen eines linearen Kraftübertragungselementes 1 geformt sind, das aus dem Mittelstück 13 besteht, an dessen beiden Enden je ein Endstück 14 angeordnet ist, welches parallel zum Mittelstück 13 verschiebbar zwischen zwei Hilfsanschlägen 16 gelagert ist.

In der in Figur 1 dargestellten Konfiguration werden die Endstücke 14 durch eine längsgerichtete Feder 15 vom inneren Hilfsanschlag 16 hinweg nach außen gedrückt.

Bei der in Figur 1 dargestellten Ausführungsvariante weisen sowohl das Mittelstück 13 als auch die beiden Endstücke 14 genau das gleiche Verzahnungsprofil auf, weshalb auch das Zahnrad 4 gleichmäßig durchgehende Zähne trägt und damit sowohl das Mittelstück als auch die beiden Endstücke bewegt.

In Figur 1 ist als Beispiel für eine Last 2 ein Probenentnehmer gezeichnet, bestehend aus einem etwa quaderförmigen Gefäß, das auf seiner Oberseite durch einen Schlitz befüllbar ist. Dieser Probenentnehmer ist durch einen Mitnehmer mit dem Mittelstück 13 des Kraftübertragungselementes 1 verbunden. Die gesamte Einheit, bestehend aus Kraftübertragungselement 1 und der daran befestigten Last 2, ist in Richtung der in Figur 1 eingetragenen, beiden Doppelpfeile verschiebbar, wobei die dafür nötige Lagerung in Figur 1 nicht eingezeichnet ist. Durch gestrichelte Linien sind zwei weitere Positionen der Last 2 in der Nähe der Anschläge 5 gezeigt.

Der gesamte, mögliche Verfahrweg ist durch die beiden quaderförmigen Anschläge 5 begrenzt, welche in diesem Ausführungsbeispiel den Verfahrweg der Last begrenzen. Alternativ könnten solche Anschläge auch die Stirnseiten des Mittelstückes 13 vom Kraftübertragungselement 1 berühren.

Innerhalb dieses Verfahrweges kann das Kraftübertragungselement 1 linear verfahren werden. Dazu greift das Zahnrad 4 mit einem seiner Zähne 41 in die komplementären Zähne auf dem Mittelstück 13 und einem der beiden Endstücken 14 ein. Je zwei aufeinander zuweisende Flanken zweier benachbarter Zähne bilden einen Abschnitt 11 des Kraftübertragungselementes 1 mit der Vertiefung 12, die Raum für das Eingreifen eines Zahnes 41 vom Zahnrad 4 bietet.
Durch Verdrehen des Zahnrades 4 wird das Kraftübertragungselement 1 linear bewegt.
In Figur 1 sind das Kraftübertragungselement 1 und die Last 2 etwa in der Mitte des Verfahrweges dargestellt. Auf den folgenden zwei Bildern sollen charakteristische, andere Positionen gezeichnet werden:

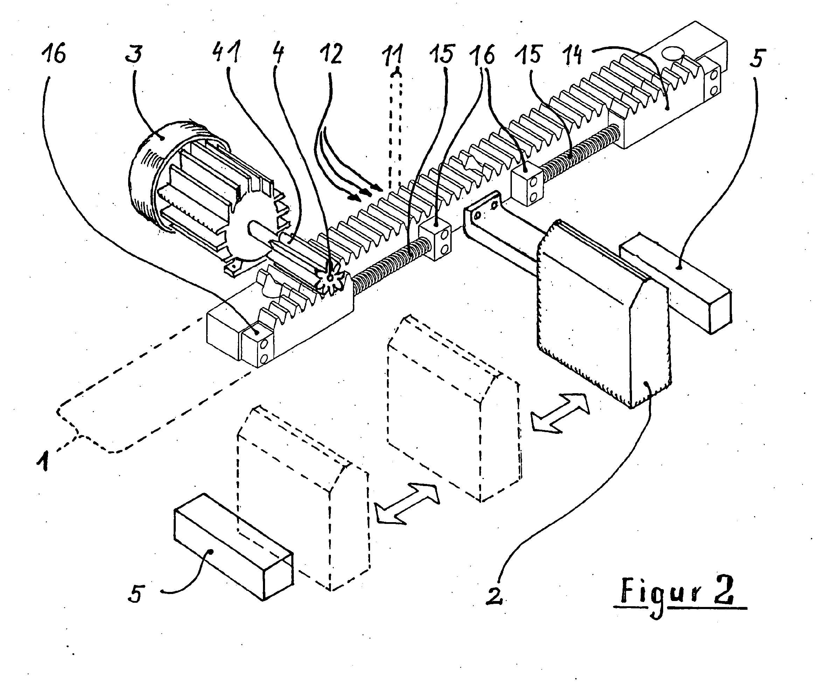

In **Figur 2** ist das Kraftübertragungselement 1 in die Nähe seines rechten Anschlages 5 verschoben. In dieser Position greift das Zahnrad 4 sowohl in das Mittelstück 13 als auch in ein Endstück 14 ein. Die zu diesem Endstück 14 gehörige, längsgerichtete Feder 15 ist in dieser Phase der Bewegung immer noch auf ihre maximale Länge ausgedehnt, weil das Endstück 14 noch den äußeren Hilfsanschlag 16 berührt.

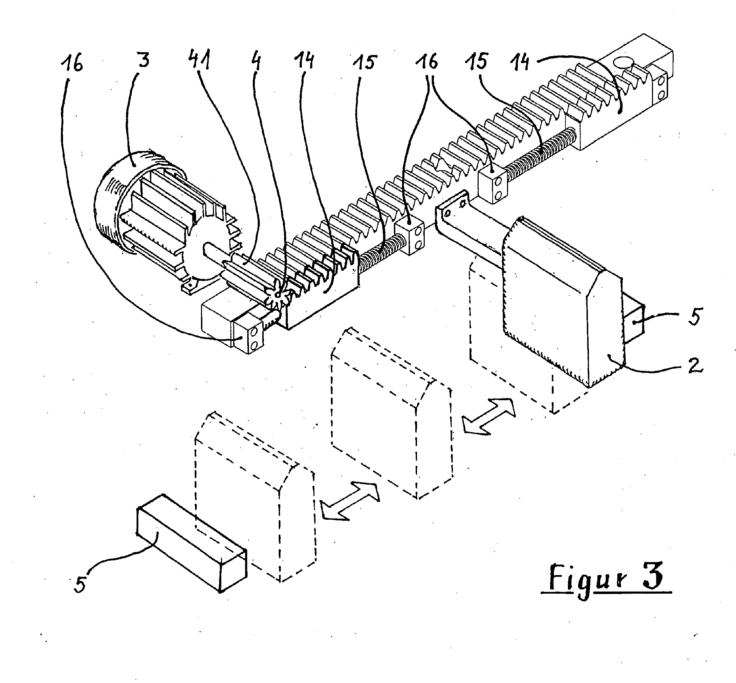

In **Figur 3** ist gezeichnet, wie die Last 2 den rechten Anschlag 5 erreicht hat und auch das Mittelstück 13 an dem rechten Ende seines Verfahrweges angelangt ist. In dieser Phase der Bewegung berührt das Zahnrad 4 das Mittelstück 13 bereits nicht mehr, sondern nur noch das Endstück 14. Derweil das Mittelstück 13 und die Last 2 unbewegt am Anschlag 5 verharren, kann das Endstück 14 noch verschiedene Positionen einnehmen: Dargestellt ist die Position, bei der das Zahnrad 4 dieses Endstück 14 soweit wie möglich vom linken Hilfsanschlag 16 weg und durch Zusammendrücken der längsgerichteten Feder 15 so nah wie möglich an seinen rechten Hilfsanschlag 16 heranverschoben hat. Dadurch wird die Führungsstange sichtbar, auf welcher das Endstück 14 gleitet und auf welcher die längsgerichtete Feder 15 geführt wird.

Die in Figur 3 dargestellte Position des Endstückes 14 markiert den Punkt maximaler Auslenkung des Endstückes. Die Feder 15 speichert in dieser Phase der Bewegung die maximal erreichbare, mechanische Energiemenge, mit der im nächsten Schritt das Endstück 14 wieder zurück an den linken Hilfsanschlag 16 gedrückt wird. Dabei wird es wieder in Eingriff mit dem Zahnrad 4 kommen, wodurch der Antrieb 3 verdreht wird, was jedoch ohne weiteres möglich ist, da er in dieser Phase von seiner Stromversorgung getrennt ist.

In Figur 3 wird nachvollziehbar, dass in der dargestellten Position die noch im rotierenden Antrieb 3 gespeicherte kinetische Energie vollständig abgebaut sein sollte. Anderenfalls dreht sich der Antrieb 3 weiter, wodurch ein weiterer Zahn 41 vom Zahnrad 4auf die Kante des Endstückes 14 auftrifft, dieses um einen geringen Betrag zur Mitte hin verschiebt und über die Kante hinweggleitet. Im Extremfall kann durch wiederholt auf die Kante des Endstückes 14 aufschlagende Zähne 41 ein knatterndes Geräusch entstehen, was durch die Auswahl einer höher belastbaren Feder 15 vermieden werden kann.

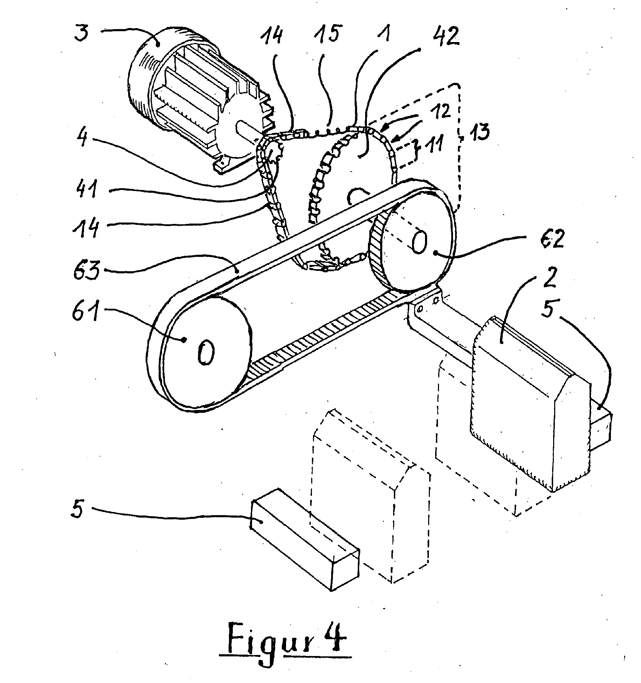

In **Figur 4** ist ein anderes Ausführungsbeispiel eines erfindungsgemäßen teilelastischen Getriebes dargestellt. Als Beispiel für die Last 2 ist der in den vorangegangenen drei Figuren gezeichnete Probenentnehmer wiederholt und hier - ebenso wie in Figur 3 - beim Berühren des rechten Anschlages 5 gezeichnet.

Die Last 2 ist über einen Mitnehmer mit der Hilfskette 63 verbunden, die über das erste Zwischenrad 61 und das zweite Zwischenrad 62 umläuft. Durch Reversieren der Hilfskette 63 wird auch die Bewegung der Last 2 reversiert. In Figur 4 ist die Hilfskette 63 symbolisch als Zahnriemen dargestellt, kann jedoch ebenso als Kette ausgeführt werden.

Auf der Achse des zweiten Zwischenrades 62 ist das Abtriebskettenrad 42 angeordnet, dessen Zähne zu den Vertiefungen 12 in den Abschnitten 11 des Kraftübertragungselementes komplementär geformt sind. Aus zahlreichen Abschnitten 11, die gelenkig miteinander verbunden sind, ergibt sich in dieser Ausführungsform des Kraftübertragungselementes 1 die Form einer Kette. Diese Kette ist erfindungsgemäß in ein Mittelstück 13 und zwei daran angrenzende Endstücke 14 aufgeteilt.

In Figur 4 ist der Übersichtlichkeit halber nur eine Trennstelle zwischen dem Mittelstück 13 und einem Endstück 14 dargestellt, die durch die längsgerichtete Feder 15 überbrückt wird. Die in Figur 4 dargestellte Phase der Reversierbewegung bezieht sich auf das Erreichen des Anschlages 5 durch die Last 2 sowie auf das maximale Überschwingen des Antriebs 3, also auf eine zu Figur 3 äquivalente Phase der Reversierbewegung.

Erfindungsgemäß ist die zu diesem Zeitpunkt überschüssige kinetische Energie des Antriebs 3 in der Feder 15 gespeichert, die jedoch im Unterschied zu Figur 3 dafür auseinander gezogen ist. In der zur dargestellten Phase anschließenden, nächsten Phase wird sich die Feder 15 wieder zusammenziehen und über das Endstück 14 des Kraftübertragungselementes 1 das Zahnrad 4 im Urzeigersinn verdrehen und sich dadurch wieder soweit zusammenziehen, dass das Mittelstück 13 das Endstück 14 des Kraftübertragungselementes 1 berührt.

In Figur 4 ist erkennbar, dass das - hier kettenförmige - Kraftübertragungselement 1 nicht straff gespannt ist, sondern durch die Dehnung der Feder 15 etwas "durchhängt". Es ist leicht nachvollziehbar, dass dieser Bereich des Kraftübertragungselementes 1 durch einen Kettenspanner stabilisiert werden kann, wobei jedoch darauf zu achten ist, dass dessen Federkraft nicht so hoch dimensioniert ist, dass es die längsgerichtete Feder 15 auseinanderziehen kann.

### Bezugszeichenliste

- 1: Kraftübertragungselement, meistens mit der Last 2 verbunden
- 11: Abschnitt des Kraftübertragungselementes 1
- 12: Vertiefungen in den Abschnitten 11
- 13: Mittelstück des Kraftübertragungselementes 1
- 14: Endstücke des Kraftübertragungselementes 1, beidseitig anschließend an das Mittelstück 13
- 15: längsgerichtete Feder, verbindet das Mittelstück 13 mit einem Endstück 14.
- 16: Hilfsanschlag, begrenzt die Bewegung eines Endstückes 14
- 2: Last
- 3: Antrieb, meistens mit dem Zahnrad 4 verbundenen
- 4: Zahnrad
- 41: Zähne, auf Zahnrad 4, komplementär zu den Vertiefungen 12
- 42: Abtriebskettenrad, bei Kraftübertragungselement 1 in Kettenform
- 5: Anschläge, begrenzen die Bewegung des Kraftübertragungs-elementes 1
- 61: erstes Zwischenrad, koaxial zu Abtriebskettenrad 42 angeordnet
- 62: zweites Zwischenrad, in der gleichen Ebene wie das erste Zwischenrad 61 angeordnet
- 63: Hilfskette, läuft über das erste Zwischenrad 61 und das zweite Zwischenrad 62

## Patentansprüche

1. Teilelastisches Getriebe für reversierende Bewegungen zwischen zwei Anschlägen (5), bestehend aus einem drehbar gelagerten Zahnrad 4 und einem länglichen Kraftübertragungselement (1)
- in das die Zähne (41) des Zahnrades (4) eingreifen und
- das zwischen zwei Anschlägen (5) bewegbar ist und
- das in Längsrichtung zahlreiche, aneinandergrenzende und zueinander identische Abschnitte (11) mit senkrecht zur Längsachse ausgerichteten Vertiefungen (12) aufweist,
wobei die Zähne (41)
- komplementär zu den Vertiefungen (12) des Kraftübertragungselementes (1) geformt sind und
- entsprechend der Länge der Abschnitte (1) zueinander beabstandet sind und
- wenigstens ein Zahn (41) kraftschlüssig in einer der Vertiefungen (12) des Kraftübertragungselementes (1) anliegt
**dadurch gekennzeichnet, dass** das Kraftübertragungselement (1) in ein Mittelstück (13) und zwei angrenzende Endstücke (14) aufgeteilt ist und alle diese Stücke entweder
- längs hintereinander angeordnet sind und sich mit ihren Stirnseiten berühren oder
- parallel zueinander ausgerichtet sind und sich das Mittelstück (13) jeweils mit einem Endstück (14) auf einer Länge von wenigstens einem Abschnitt (11) seitlich überlappt und
- das Mittelstück (13) und die Endstücke (14) aus jeweils kraftschlüssig miteinander verbundenen Abschnitten (11) bestehen und
- die auf beiden Seiten an das Mittelstück (13) anschließenden Endstücke (14) parallel oder longitudinal gegenüber dem Mittelstück (13) verschiebbar sind und
- über je eine längsgerichtete Feder (15) mit dem Mittelstück (13) verbunden sind.

2. Teilelastisches Getriebe nach dem vorhergehenden Anspruch **dadurch gekennzeichnet, dass** das Kraftübertragungselement (1) mit einer Last (2) verbunden ist und das Zahnrad (4) mit dem Antrieb (3).

3. Teilelastisches Getriebe nach einem der vorhergehenden Ansprüche **dadurch gekennzeichnet, dass** die Endstücke (14) zwischen zwei Hilfsanschlägen (16) bewegbar sind.

4. Teilelastisches Getriebe nach einem der vorhergehenden Ansprüche **dadurch gekennzeichnet, dass** das Kraftübertragungselement (1) eine Zahnstange ist

5. Teilelastisches Getriebe nach Anspruch 4,**dadurch gekennzeichnet, dass** die Endstücke (14) parallel zum Mittelstück (13) angeordnet sind und
- der Verfahrweg der Endstücke (14) zu einem Teil über das Mittelstück (13) hinausragt und
- das Zahnrad (4) aus zwei koaxial zueinander angeordneten Zahnrädern besteht,
- von denen die Zähne (41) des einen komplementär zur Verzahnung des Mittelstückes (13) und
- die Zähne (41) des anderen komplementär zur Verzahnung der Endstücke (14) beabstandet und geformt sind.

6. Teilelastisches Getriebe nach Anspruch 5, **dadurch gekennzeichnet, dass** die Feder (15) zwischen dem jeweils inneren Hilfsanschlag (16) und dem Endstück (14) angeordnet ist und
- ein rotierender Antrieb (3) mit dem Zahnrad (4) gekoppelt ist und
- die Last mit dem Mittelstück (13) verbunden ist.

7. Teilelastisches Getriebe nach Anspruch 5 oder 6, **dadurch gekennzeichnet, dass** die Feder (15) zwischen dem jeweils äußeren Hilfsanschlag (16) und dem Endstück (14) angeordnet ist und
- ein linearer Antrieb (3) mit dem Mittelstück (13) verbunden ist und
- das Zahnrad (4) mit einer Spindel verbunden ist, auf der eine Mutter angeordnet ist, die durch die Spindel zwischen zwei Anschlägen (5) reversierbar ist.

8. Teilelastisches Getriebe nach einem der vorhergehenden Ansprüche **dadurch gekennzeichnet dass** die Feder (15)
- eine Spiralfeder oder
- eine Reihe von Tellerfedern oder
- ein dauerelastischer Kunststoffblock oder
- ein Pneumatikzylinder
ist.

9. Teilelastisches Getriebe nach einem der vorhergehenden Ansprüche **dadurch gekennzeichnet, dass** parallel zur Feder (15) ein Stoßdämpfer angeordnet ist.

10. Teilelastisches Getriebe nach einem der vorhergehenden Ansprüche **dadurch gekennzeichnet, dass** im Verfahrweg der Endstücke (14) außerhalb des Mittelstückes (13) eine linear wirkende Bremse angeordnet ist.

11. Teilelastisches Getriebe nach einem der vorhergehenden Ansprüche **dadurch gekennzeichnet, dass** das Kraftübertragungselement (1) eine Kette ist, deren Abschnitte (11) gelenkig miteinander verbunden sind und
- das Mittelstück (13) über die beiden Endstücke (14), die miteinander verbunden sind, eine ringförmige Kette bildet und
- die Kette über das Zahnrad (4) und ein drehbar gelagertes Abtriebskettenrad (42) gespannt ist und
- das Zahnrad (4) vom Antrieb (3) gedreht wird und
- koaxial zum Abtriebskettenrad (42) ein erstes Zwischenrad (62) angeordnet ist, auf dem eine Hilfskette (63) oder ein Hilfszahnriemen verläuft, welche(r) über ein zweites Zwischenrad (61) gespannt ist und die Last (2) hin und her bewegt und
- beim Erreichen des ersten Anschlages (5) durch die Last (2) eine erste Feder (15) im zugkraftbelasteten, frei schwebenden Teil der Kette in unmittelbarer Nähe des Abtriebskettenrades (42) befindet und eine zweite Feder (15) auf dem Abtriebskettenrad (42) aufliegt und dadurch blockiert ist und
- beim Erreichen des zweiten Anschlages (5) durch die Last (2) die zweite Feder (15) sich im anderen, frei schwebenden Teil der Kette in unmittelbarer Nähe des Abtriebskettenrades (42) befindet und die erste Feder (15) auf dem Abtriebskettenrad (42) aufliegt und dadurch blockiert ist.

12. Teilelastisches Getriebe nach einem der vorhergehenden Ansprüche **dadurch gekennzeichnet, dass** das Kraftübertragungselement (1) eine Kette ist, deren Abschnitte (11) gelenkig miteinander verbunden sind und
- das Mittelstück (13) über die beiden Endstücke (14), die miteinander verbunden sind, eine ringförmige Kette bildet und
- die Kette über das Zahnrad (4) und ein drehbar gelagertes, zweites Kettenrad gespannt ist und
- das Zahnrad (4) vom Antrieb (3) gedreht wird und
- parallel zu dieser Kette und darauf aufliegend eine Hilfszahnkette angeordnet ist, deren Zähne komplementär zu den Vertiefungen (12) in den Abschnitten (11) geformt sind und
- die Länge des parallel verlaufenden Bereiches genau der Länge des Verfahrweges der Last zwischen den Anschlägen (5) entspricht und
- die Hilfszahnkette ein geschlossener Ring ist, der über zwei drehbar gelagerte Räder zu einem Oval aufgespannt ist und
- Kette und Hilfszahnkette sich innerhalb des parallel verlaufenden Bereiches in einer Parallelführung befinden, die aus zahlreichen, kleinen Kettenrädern oder aus zwei parallelen Gleitstücken besteht.

13. Teilelastisches Getriebe nach Anspruch 12 oder 13, **dadurch gekennzeichnet, dass** das Kraftübertragungselement (1) ein Zahnriemen ist.

14. Teilelastisches Getriebe nach Anspruch 12,13 oder 14, **dadurch gekennzeichnet, dass** das ringförmige Kraftübertragungselement (1) durch einen federbelasteten Kettenspanner spannbar ist.

15. Teilelastisches Getriebe nach einem der vorhergehenden Ansprüche, **dadurch gekenntzeichnet, dass** die Last (2) eine verschwenkbare Drosselklappe oder verschwenkbare Sperrklappe in einem Rohr oder einer Rinne oder einem Kanal oder einem Fluss ist.

16. Teilelastisches Getriebe nach einem der vorhergehenden Ansprüche **dadurch gekennzeichnet, dass** die Last (2) ein Probenentnehmer ist, der in einem Rohr oder in einer Rinne quer zur Durchflussrichtung bewegt wird.

## Claims

1. Partially elastic transmission system for reversing movements between two stops (5), comprising a rotatably mounted gear wheel (4) and an elongated power transmission element (1)
- in which the teeth (41) of the gear wheel (4) engage, and
- is movable between two stops (5) and
- which comprises, in the longitudinal direction, a multiplicity of mutually adjacent sections (11), which are identical to one another, and have depressions (12) oriented perpendicular to the longitudinal axis,
the teeth (41) being
- complementary to the depressions (12) of the power transmission element (12), and
- being spaced from one another corresponding to the length of the sections (1), and
- at least one tooth (41) bearing positively in one of the depressions (12) of the force transmission element (1)
**characterised in that**
the power transmission element (1) being subdivided into a central portion (13) and two adjacent end portions (14), and all these portions either being
- arranged longitudinally one behind the other and contacting one another at their end faces, or
- oriented parallel to one another and the central portion (13) in each case overlapping laterally with an end portion (14) over a length of at least one section (6), and
- the central portion (13) and the end portions (14) comprising positively connected sections (11), and the end portions (14), which are connected at both sides to the central portion (13) are parallelly or longitudinally slidable with respect to the central portion (13), and
- are connected via one longitudinally oriented springs (15) in each case to the central portion (13).

2. Partially elastic transmission system according to the preceding claim, **characterised in that** the power transmission element (1) is connected to a load (2) and the gear wheel (4) to the drive (3).

3. Partially elastic transmission system according to one of the preceding claims, **characterised in that** the end portions (14) are movable between two auxiliary stops (16).

4. Partially elastic transmission system according one of the preceding claims, **characterised in that** the power transmission element (1) is a rack

5. Partially elastic transmission system according to claim 4, **characterised in that** the end portions (14) are disposed parallel to the central portion (13) and
- the travel path of the end portions (14) of one part projects beyond the central portion (3), and
- the gear wheel (4) consists of two gear wheels, which are arranged coaxially to one another,
- and off which the teeth (41) of one are formed and spaced so as to be complementary to the central portion (13) and
- the teeth (41) of the other are formed and spaced so as to be complementary to the toothing of the end portions (14).

6. Partially elastic transmission system according to claim 5, **characterised in that** the spring (15) is arranged between the respective inner auxiliary stop (16) and the end portion (14) and
- a rotational drive (3) is coupled to the gear wheel (4), and
- the load is connected to the central portion (13).

7. Partially elastic transmission system according to claim 5 or 6, **characterised in that** the spring (15) is arranged between the outermost auxiliary stop (16) in each case and the end portion (14), and
- a linear drive (13) is connected to the central portion (13), and
- the gear wheel (4) is connected to a spindle, on which a nut is arranged, which is reversible by means of the spindle between two stops (5).

8. Partially elastic transmission system according to one of the preceding claims, **characterised in that** the spring (15) is
- a helical spring or
- a row of plate springs or
- a permanently elastic polymer block or
- a pneumatic cylinder.

9. Partially elastic transmission system for reversing movements according one of the preceding claims, **characterised in that** a shock absorber is arranged parallel to the spring (15).

10. Partially elastic transmission system according to one of the preceding claims, **characterised in that** a linearly acting brake is arranged outside the central portion (13) in the travel path of the end portions (14).

11. Partially elastic transmission system according to one of the preceding claims, **characterised in that** the power transmission element (1) is a chain, whose sections (11) are articulatedly connected to one another, and
- the central portion (13), via the two end portions (14), which are connected together, forms a ring-shaped chain, and
- the chain is tensioned via the gear wheel (4) and a rotatably mounted power take-off chain wheel (42), and
- the gear wheel (4) is rotated by the drive, and
- coaxially to the power take-off chain wheel (42), a first intermediate wheel (62) is arranged, on which an auxiliary chain (63) or an auxiliary rack runs, which is tensioned via a second intermediate wheel (61) and moves the load (2) back and forth, and
- when the load (2) reaches the first stop (5), a first spring (15) is located in the tensile-force-loaded, free-floating portion of the chain, in the direct vicinity of the power take-off wheel (42), and a second spring (15) lies on the power take-off chain wheel (42) and is blocked thereby, and
- when the load (2) reaches the second stop (5), the second spring (15) is located in the other, free-floating portion of the chain, in the direct vicinity of the power take-off wheel (42), and the first spring (15) lies on the power take-off chain wheel (42) and is blocked thereby.

12. Partially elastic transmission system according to one of the preceding claims, **characterised in that** the power transmission element (1) is a chain, whose sections (11) are articulatedly connected to one another, and
- the central portion (13), via the two end portions (14), which are connected together, forms a ring-shaped chain, and
- the chain is tensioned via the gear wheel (4) and a rotatably mounted second chain wheel, and
- the gear wheel (4) is rotated by the drive (3), and
- parallel to this chain and lying thereon, an auxiliary toothed chain is arranged, whose teeth are complementary to the depressions (12) in the sections (11), and
- the length of the parallel extending region precisely corresponds to the length of the traverse distance of the load between the stops (5), and
- the auxiliary toothed chain is a closed ring, which is tensioned via two rotatably mounted wheels to form an oval, and
- the chain and auxiliary toothed chain are located within the parallely extending region in a parallel guide, which consists of a multiplicity of small chain wheels or of two parallel sliding portions.

13. Partially elastic transmission system according to claim 12 or 13, **characterised in that** the power transmission element (1) is a toothed belt.

14. Partially elastic transmission system according to claim 12, 13 or 14, **characterised in that** the ring-shaped power transmission element (1) can be tensioned by a spring-loaded chain tensioner.

15. Partially elastic transmission system according to one of the preceding claims, **characterised in that** the load (2) is a pivotable throttle valve or a pivotable shut-off valve in a tube or a trough or a canal or a river.

16. Partially elastic transmission system according to one of the preceding claims, **characterised in that** the load (2) is a sampler, which is moved in a tube or in a trough transversely to the flow direction.

## Revendications

1. Engrenage partiellement élastique destiné à des mouvements réversibles entre deux butées (5), composé d'un pignon 4 monté sur palier tournant et d'un élément de transmission de force (1)
■ dans lequel les dents (41) du pignon (4) s'engrènent,
■ pouvant être déplacé entre deux butées (5) et
■ qui présente, dans le sens de la longueur, de nombreuses sections (11) identiques avec des renfoncements (12) orientés verticalement par rapport à l'axe longitudinal
sachant que les dents (41)
■ sont formées de façon complémentaire par rapport aux renfoncements (12) de l'élément de transmission de force (1) et
■ sont espacées les unes par rapport aux autres en fonction de la longueur des sections (1) et
■ qu'au moins une dent (41) repose, en y adhérant, dans un des renfoncements (12) de l'élément de transmission de force (1)
**caractérisé par le fait**
**que** l'élément de transmission de force (1) est subdivisé en une pièce médiane (13) et deux pièces d'extrémité (14) avoisinantes, et que toutes ces pièces
■ sont soit disposées l'une derrière l'autre dans le sens de la longueur et se touchent avec leurs côtés avant
■ ou bien sont disposées parallèlement les unes aux autres, chaque pièce médiane (13) se chevauchant latéralement avec une pièce d'extrémité (14) sur une longueur d'au moins une section (11),
■ la pièce médiane (13) et les pièces d'extrémité (14) consistant à chaque fois en sections (11) reliées les unes aux autres en adhérant,
■ les pièces d'extrémité (14) venant se raccorder des deux côtés à la pièce médiane (13) pouvant être déplacées parallèlement ou dans le sens longitudinal par rapport à la pièce médiane (13),
■ chacune étant reliée à la pièce médiane (13) par l'intermédiaire d'un ressort (13) orienté dans le sens de la longueur.

2. Engrenage partiellement élastique selon la revendication précédente, **caractérisé par le fait que** l'élément de transmission de force (1) est relié à une charge (2) et le pignon à l'entraînement (3).

3. Engrenage partiellement élastique selon la revendication précédente, **caractérisé par le fait que** les pièces d'extrémité (14) peuvent être déplacées entre deux butées auxiliaires (16).

4. Engrenage partiellement élastique selon une des revendications précédentes, **caractérisé par le fait que** l'élément de transmission de force (1) est une crémaillère.

5. Engrenage partiellement élastique selon la revendication 4, **caractérisé par le fait que** les pièces d'extrémité (14) sont disposées parallèlement à la pièce médiane (13) et que
■ la course de déplacement des pièces médianes (14) par rapport à une pièce dépasse de la pièce médiane et
■ que le pignon (4) consiste en deux pignons disposés en sens coaxial l'un par rapport à l'autre,
■ les dents (41) d'un des pignons étant formées et espacées de façon complémentaire à la denture de la pièce médiane (13) et
■ les dents (41) de l'autre pignon étant formées et espacées de façon complémentaire à la denture des pièces d'extrémité (14).

6. Engrenage partiellement élastique selon la revendication 5, **caractérisé par le fait que** le ressort (15) est disposé à chaque fois entre la butée auxiliaire interne (16) et la pièce d'extrémité (14),
■ un entraînement rotatif (3) étant couplé avec le pignon (4),
■ la charge étant reliée à la pièce médiane.

7. Engrenage partiellement élastique selon une la revendication 5 ou 6, **caractérisé par le fait que** le ressort (15) est disposé à chaque fois entre la butée auxiliaire interne (16) et la pièce d'extrémité (14),
■ un entraînement linéaire (3) étant relié à la pièce médiane (13),
■ le pignon (4) étant relié à une broche sur laquelle est disposé un contre-écrou à travers lequel la broche est réversible entre deux butées (5).

8. Engrenage partiellement élastique selon une des revendications, **caractérisé par le fait que** le ressort (15)
■ est un ressort spiral ou
■ une série de rondelles Belleville ou
■ un vérin pneumatique.

9. Engrenage partiellement élastique selon une des revendications précédentes, **caractérisé par le fait qu'**un amortisseur de chocs est disposé parallèlement au ressort (15).

10. Engrenage partiellement élastique selon une des revendications précédentes, **caractérisé par le fait qu'**un frein à effet linéaire est disposé dans la course de déplacement des pièces d'extrémité (14), en dehors de la pièce médiane (13).

11. Engrenage partiellement élastique selon une des revendications précédentes, **caractérisé par le fait que** l'élément de transmission de force (1) est une chaîne dont les sections (11) sont reliées de façon articulée les unes aux autres,
■ la pièce médiane (13) par l'intermédiaire de laquelle sont reliées les deux pièces d'extrémité (14) formant une chaîne en forme d'anneau,
■ la chaîne étant tendue par l'intermédiaire du pignon (4) et d'un pignon de chaîne de sortie (42) monté sur palier tournant,
■ le pignon (4) étant mis en rotation par l'entraînement (3),
■ un premier pignon intermédiaire (62) étant disposé dans le sens coaxial par rapport au pignon de chaîne de sortie (42), lequel est parcouru par une chaîne auxiliaire (63) ou une courroie crantée qui est tendue par un deuxième pignon intermédiaire (61) et qui déplace la charge (2) en va et vient,
■ un premier ressort (15) se trouvant, lorsque la charge (2) atteint la première butée (5), dans la partie soumise à l'effort de traction, et oscillant librement, de la chaîne à proximité immédiate du pignon de chaîne de sortie (42), un deuxième ressort (15) reposant sur le pignon de chaîne de sortie (42) en étant bloqué par ce dernier,
■ le deuxième ressort (15) se trouvant, lorsque la charge (2) atteint la deuxième butée (5), dans l'autre partie oscillant librement, de la chaîne à proximité immédiate du pignon de chaîne de sortie (42), le premier ressort (15) reposant sur le pignon de chaîne de sortie (42) en étant bloqué par ce dernier

12. Engrenage partiellement élastique selon une des revendications précédentes, **caractérisé par le fait que** l'élément de transmission de la force (1) est une chaîne dont les sections (11) sont reliées de façon articulée les unes aux autres,
■ la pièce médiane (13) formant, par l'intermédiaire des deux pièces d'extrémité (14) qui sont reliées entre elles, une chaîne en forme d'anneau,
■ la chaîne étant tendue par l'intermédiaire du pignon (4) et par un deuxième pignon de chaîne monté sur palier tournant,
■ le pignon (4) étant mis en rotation par l'entraînement (3),
■ une chaîne crantée auxiliaire étant disposée parallèlement à cette chaîne en reposant dessus, dont les dents sont formées de façon complémentaire aux renfoncements (12) dans les sections (11),
■ la longueur de la zone à passant parallèlement correspondant exactement à la longueur de la course de déplacement de la charge entre les butées (5),
■ la chaîne crantée auxiliaire étant un anneau fermé qui est tendu par deux pignons montés sur palier tournant pour former un ovale,
■ la chaîne et la chaîne crantée auxiliaire se trouvant, à l'intérieur de la zone passant parallèlement, dans un guidage parallèle consistant en de nombreux pignons de chaîne ou de deux pièces coulissantes parallèles.

13. Engrenage partiellement élastique selon la revendication 12 ou 13, **caractérisé par le fait que** l'élément de transmission de la force est une courroie crantée.

14. Engrenage partiellement élastique selon la revendication 12, 13 ou 14, **caractérisé par le fait que** l'élément de transmission de la force (1) en forme d'anneau peut être tendu par un tendeur de chaîne contraint par un ressort.

15. Engrenage partiellement élastique selon une des revendications précédentes, **caractérisé par le fait que** la charge (2) est un clapet d'étranglement pivotant ou un clapet d'arrêt dans un tuyau ou une gouttière ou une canalisation ou un flux.

16. Engrenage partiellement élastique selon une des revendications précédentes, **caractérisé par le fait que** la charge (2) est un dispositif de prélèvement d'échantillon qui est déplacé dans un tuyau ou une gouttière, perpendiculairement au sens du flux.
